# EUROPEAN PATENT APPLICATION

(11) **EP 4 590 019 A1**
(43) Date of publication of application: **23.07.2025**
(21) Application number: 23876510.1
(22) Date of filing: 22.09.2023
(51) Int. Cl.: H04W 28/06

(54) **COMMUNICATION METHOD, COMMUNICATION APPARATUS, AND COMMUNICATION SYSTEM**

(30) Priority: 13.10.2022 CN 202211253976
(71) Applicant: Huawei Technologies Co., Ltd., Shenzhen, Guangdong 518129 (CN)
(72) Inventor: DING, Hui, Shenzhen, Guangdong 518129 (CN); JING, Hao, Shenzhen, Guangdong 518129 (CN); WANG, Yufang, Shenzhen, Guangdong 518129 (CN)
(74) Representative: Grünecker Patent- und Rechtsanwälte PartG mbB
(86) International application number: PCT/CN2023/120862
(87) International publication number: WO 2024/078305

(57) **Abstract**

This application provides a communication method, a communication apparatus, and a communication system. The method includes: A network repository network element receives a network element registration request from a first network element, where the network element registration request includes network element parameter information of the first network element, the network element parameter information includes identifier information of shared data and identifier information of the first network element, and the network element parameter information does not include the shared data corresponding to the identifier information of the shared data. The network repository network element stores the network element parameter information. In this solution, when the first network element registers a service with the network repository network element, the sent network element parameter information does not carry the shared data, but carries the identifier information of the shared data. This can reduce a size of the network element parameter information, to reduce bandwidth resource overheads and signaling overheads between the first network element and the network repository network element.

## Description

### CROSS-REFERENCE TO RELATED APPLICATIONS

This application claims priority to Chinese Patent Application No. 202211253976.0, filed with the China National Intellectual Property Administration on October 13, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In a 5th generation (5th generation, 5G) network architecture, to implement a registration procedure of a network element service, a network repository function (network repository function, NRF) network element is introduced. The procedure is as follows: A network function (network function, NF) network element sends a network element registration request to the NRF network element, where the network element registration request includes network element parameter information (NFprofile); and then the NRF stores the network element parameter information.

When a plurality of NF network elements register with the NRF network element, if carried network element parameter information includes a large amount of content, bandwidth resource overheads and signaling overheads between the NF network element and the NRF network element are large.

### SUMMARY

This application provides a communication method, a communication apparatus, and a communication system, to reduce bandwidth resource overheads and signaling overheads of a network repository network element.

According to a first aspect, an embodiment of this application provides a communication method. The method may be performed by a network repository network element or a chip used in the network repository network element. An example in which the network repository network element performs the method is used. The network repository network element receives a network element registration request from a first network element, where the network element registration request includes network element parameter information of the first network element, the network element parameter information includes identifier information of shared data and identifier information of the first network element, and the network element parameter information does not include the shared data corresponding to the identifier information of the shared data. The network repository network element stores the network element parameter information.

In the foregoing solution, when the first network element registers a service with the network repository network element, the sent network element parameter information does not carry the shared data, but carries the identifier information of the shared data. This can reduce a size of the network element parameter information, to reduce bandwidth resource overheads and signaling overheads between the first network element and the network repository network element.

In a possible implementation method, the network repository network element has stored the shared data.

In the foregoing solution, the network repository network element needs to store only one copy of the shared data, so that occupation of storage resources of the network repository network element can be reduced, and resource utilization efficiency is improved.

In a possible implementation method, the network repository network element sends a subscription request to a central node, where the subscription request includes the identifier information of the shared data, and the subscription request is used to subscribe to updated shared data corresponding to the identifier information of the shared data.

In the foregoing solution, it can be ensured that the network repository network element stores latest shared data by subscribing to the updated shared data, which helps another network element obtain correct data from the network repository network element.

In a possible implementation method, the network repository network element obtains the shared data, and stores the shared data.

In the foregoing solution, when the network repository network element does not store the shared data corresponding to the identifier information of the shared data, the network repository network element obtains the shared data and stores the shared data, and the network repository network element needs to store only one copy of the shared data, so that occupation of storage resources of the network repository network element can be reduced, and resource utilization is improved.

In a possible implementation method, the network repository network element obtains the shared data from the first network element.

In a possible implementation method, the network repository network element sends a subscription request to the first network element, where the subscription request includes the identifier information of the shared data, and the subscription request is used to subscribe to updated shared data corresponding to the identifier information of the shared data.

In the foregoing solution, it can be ensured that the network repository network element stores latest shared data by subscribing to the updated shared data, which helps another network element obtain correct data from the network repository network element.

In a possible implementation method, the registration request further includes information about a central node. The network repository network element obtains the shared data from the central node.

In a possible implementation method, the network repository network element sends a subscription request to the central node, where the subscription request includes the identifier information of the shared data, and the subscription request is used to subscribe to updated shared data corresponding to the identifier information of the shared data.

In the foregoing solution, it can be ensured that the network repository network element stores latest shared data by subscribing to the updated shared data, which helps another network element obtain correct data from the network repository network element.

In a possible implementation method, the registration request further includes a sharing level, and the sharing level indicates a granularity for performing data sharing.

In the foregoing solution, data sharing is performed based on the sharing level, which helps implement flexibility of a data sharing manner.

In a possible implementation method, the registration request further includes identifier information of a first network element set to which the first network element belongs, and the sharing level specifically indicates to perform data sharing at a network element set granularity. The shared data stored by the network repository network element is corresponding to the identifier information of the first network element set and the identifier information of the shared data.

In a possible implementation method, the registration request further includes identifier information of a network corresponding to the first network element, the sharing level specifically indicates to perform data sharing at a network granularity, and the identifier information of the network includes a data network name and/or a network slice identifier. The shared data stored by the network repository network element is corresponding to the identifier information of the network and the identifier information of the shared data.

In a possible implementation method, the registration request further includes information about a central node, and the sharing level specifically indicates to perform data sharing at a central node granularity. The shared data stored by the network repository network element is corresponding to the information about the central node and the identifier information of the shared data.

In a possible implementation method, the network repository network element receives a network element discovery request from a second network element, where the network element discovery request includes a network element type and a search criterion. The network repository network element sends a network element discovery response to the second network element, where the network element discovery response includes the identifier information of the first network element and the identifier information of the shared data, and the identifier information of the shared data is used by the second network element to obtain the shared data. A type of the first network element is the same as the network element type, and the first network element satisfies the search criterion.

In the foregoing solution, when returning the queried information about the first network element to the second network element, the network repository network element does not need to send the shared data corresponding to the first network element to the second network element, but sends the identifier information of the shared data corresponding to the first network element to the second network element, so that bandwidth resource overheads and signaling overheads can be reduced.

In a possible implementation method, the network element discovery response further includes information about a central node, and the information about the central node is used by the second network element to obtain the shared data from the central node.

In the foregoing solution, the second network element may obtain the shared data from the central node, but does not obtain the shared data from the data storage network element. Therefore, the data storage network element may not need to store the shared data, and occupation of storage resources of the data storage network element can be reduced.

According to a second aspect, an embodiment of this application provides a communication apparatus. The apparatus may be a network repository network element or may be a chip used in the network repository network element. The apparatus has a function of implementing any implementation method of the first aspect. The function may be implemented by hardware, or may be implemented by hardware executing corresponding software. The hardware or the software includes one or more modules corresponding to the foregoing function.

According to a third aspect, an embodiment of this application provides a communication apparatus, including a processor coupled to a memory. The processor is configured to invoke a program stored in the memory, to perform any implementation method according to the first aspect. The memory may be located inside or outside the apparatus. **In** addition, there may be one or more processors.

According to a fourth aspect, an embodiment of this application provides a communication apparatus, including a processor and a memory. The memory is configured to store computer instructions, and when the apparatus runs, the processor executes the computer instructions stored in the memory, so that the apparatus performs any implementation method according to the first aspect.

According to a fifth aspect, an embodiment of this application provides a communication apparatus, including units or means (means) configured to perform steps of any implementation method according to the first aspect.

According to a sixth aspect, an embodiment of this application provides a communication apparatus, including a processor and an interface circuit. The processor is configured to: communicate with another apparatus by using the interface circuit, and perform any implementation method according to the first aspect. There are one or more processors.

According to a seventh aspect, an embodiment of this application further provides a computer-readable storage medium. The computer-readable storage medium stores instructions, and when the instructions are run on a communication apparatus, any implementation method according to the first aspect is performed.

According to an eighth aspect, an embodiment of this application further provides a computer program product. The computer program product includes a computer program or instructions. When the computer program or the instructions are run by a communication apparatus, any implementation method according to the first aspect is performed.

According to a ninth aspect, an embodiment of this application further provides a chip system, including: a processor, configured to perform any implementation method according to the first aspect.

According to a tenth aspect, an embodiment of this application further provides a communication system. The communication system includes a network repository network element configured to perform any implementation method according to the first aspect, and a first network element configured to send a network element registration request to the network repository network element.

According to an eleventh aspect, an embodiment of this application further provides a communication method. A first network element sends a network element registration request to a network repository network element, where the network element registration request includes network element parameter information of the first network element, the network element parameter information includes identifier information of shared data and identifier information of the first network element, and the network element parameter information does not include the shared data corresponding to the identifier information of the shared data. The network repository network element receives the network element registration request sent by the first network element, and stores the network element parameter information carried in the network element registration request.

In specific implementation, the network repository network element may perform any implementation method according to the first aspect.

### BRIEF DESCRIPTION OF DRAWINGS

FIG. 1 is a diagram of a communication system according to an embodiment of this application;
FIG. 2 is a diagram of a 5G network architecture based on a service-based architecture;
FIG. 3 is a diagram of a 5G network architecture based on point-to-point interfaces;
FIG. 4 is a schematic flowchart of a communication method according to an embodiment of this application;
FIG. 5 is a schematic flowchart of a communication method according to an embodiment of this application;
FIG. 6 is a diagram of a communication apparatus according to an embodiment of this application; and
FIG. 7 is a diagram of a communication apparatus according to an embodiment of this application.

### DESCRIPTION OF EMBODIMENTS

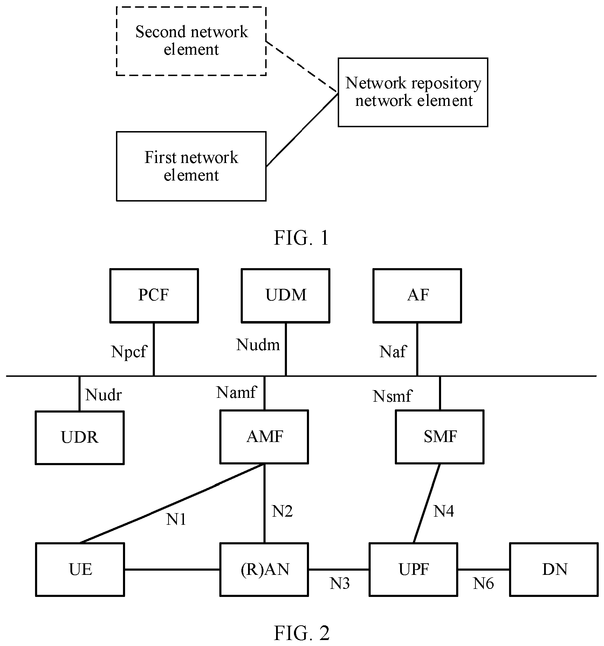

To reduce bandwidth resource overheads and signaling overheads of a network repository network element, this application provides a communication system. Refer to FIG. 1. The system includes a network repository network element and a first network element. Optionally, the communication system further includes a second network element.

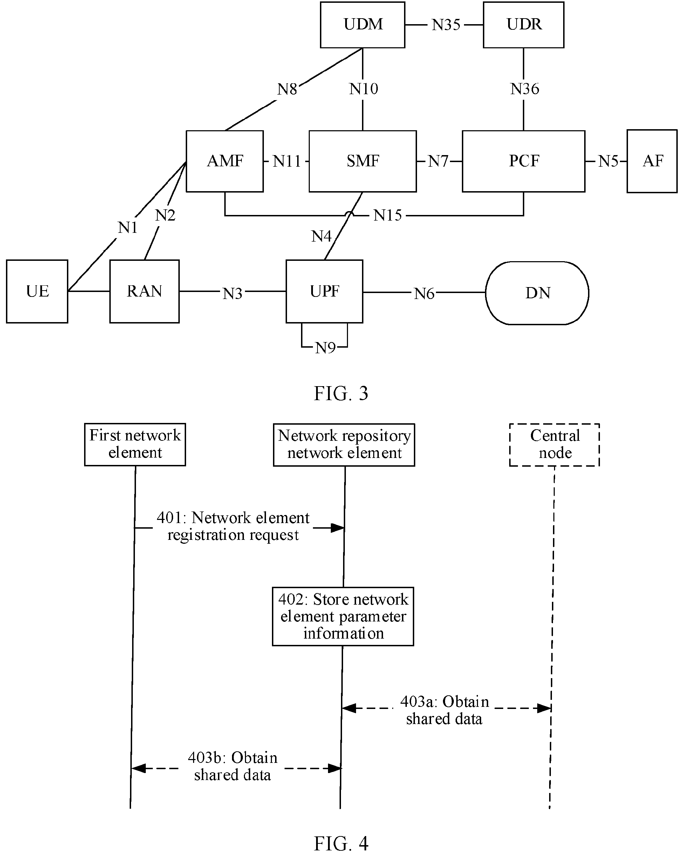

The system shown in FIG. 1 may be used in a 5G network architecture shown in FIG. 2 or FIG. 3, or certainly, may be used in a future network architecture, for example, a 6th generation (6th generation, 6G) network architecture. This is not limited in this application.

The network repository network element in FIG. 1 may be an NRF network element in FIG. 2 or FIG. 3, or may be a network element that has a function of an NRF network element in future communication such as 6G communication. This is not limited in this application.

The first network element in FIG. 1 is an NF network element, for example, may be an AMF network element, an SMF network element, a UPF network element, or a UDM network element in FIG. 2 or FIG. 3, or may be a network element that has a function of an AMF network element, an SMF network element, a UPF network element, a UDM network element, or the like in future communication such as 6G communication. This is not limited in this application.

The second network element in FIG. 1 is an NF network element, for example, may be an AMF network element, an SMF network element, a UPF network element, or a UDM network element in FIG. 2 or FIG. 3, or may be a network element that has a function of an AMF network element, an SMF network element, a UPF network element, a UDM network element, or the like in future communication such as 6G communication. This is not limited in this application.

The first network element is configured to send a network element registration request to the network repository network element, where the network element registration request includes network element parameter information of the first network element, the network element parameter information includes identifier information of shared data and identifier information of the first network element, and the network element parameter information does not include the shared data corresponding to the identifier information of the shared data. The network repository network element is configured to store the network element parameter information.

In a possible implementation method, the network repository network element has stored the shared data.

In a possible implementation method, the network repository network element is further configured to send a subscription request to a central node, where the subscription request includes the identifier information of the shared data, and the subscription request is used to subscribe to updated shared data corresponding to the identifier information of the shared data.

In a possible implementation method, the network repository network element is further configured to: obtain the shared data, and store the shared data.

In a possible implementation method, the network repository network element is specifically configured to obtain the shared data from the first network element.

In a possible implementation method, the network repository network element is further configured to send a subscription request to the first network element, where the subscription request includes the identifier information of the shared data, and the subscription request is used to subscribe to updated shared data corresponding to the identifier information of the shared data.

In a possible implementation method, the registration request further includes information about a central node. The network repository network element is specifically configured to obtain the shared data from the central node.

In a possible implementation method, the network repository network element is further configured to send a subscription request to the central node, where the subscription request includes the identifier information of the shared data, and the subscription request is used to subscribe to updated shared data corresponding to the identifier information of the shared data.

In a possible implementation method, the registration request further includes a sharing level, and the sharing level indicates a granularity for performing data sharing.

In a possible implementation method, the registration request further includes identifier information of a first network element set to which the first network element belongs, and the sharing level specifically indicates to perform data sharing at a network element set granularity. The shared data stored by the network repository network element is corresponding to the identifier information of the first network element set and the identifier information of the shared data.

In a possible implementation method, the registration request further includes identifier information of a network corresponding to the first network element, the sharing level specifically indicates to perform data sharing at a network granularity, and the identifier information of the network includes a data network name and/or a network slice identifier. The shared data stored by the network repository network element is corresponding to the identifier information of the network and the identifier information of the shared data.

In a possible implementation method, the registration request further includes information about a central node, and the sharing level specifically indicates to perform data sharing at a central node granularity. The shared data stored by the network repository network element is corresponding to the information about the central node and the identifier information of the shared data.

In a possible implementation method, the second network element is configured to send a network element discovery request to the network repository network element, where the network element discovery request includes a network element type and a search criterion. The network repository network element is further configured to send a network element discovery response to the second network element, where the network element discovery response includes the identifier information of the first network element and the identifier information of the shared data, and the identifier information of the shared data is used by the second network element to obtain the shared data. A type of the first network element is the same as the network element type, and the first network element satisfies the search criterion.

In a possible implementation method, the network element discovery response further includes information about a central node, and the information about the central node is used by the second network element to obtain the shared data from the central node.

For interaction between network elements in the system and specific execution, refer to the following method embodiments. Details are not described herein. To cope with challenges of wireless broadband technologies and maintain a leading advantage of a 3rd generation partnership project (3rd generation partnership project, 3GPP) network, the 3GPP standard group has formulated a next generation mobile communication network system (Next Generation System) architecture, which is referred to as a 5G network architecture. The architecture not only supports access to a 5G core network (core network, CN) by using a radio access technology (for example, a long term evolution (long term evolution, LTE) access technology and a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

FIG. 2 is a diagram of a 5G network architecture based on a service-based architecture. The 5G network architecture shown in FIG. 2 may include an access network device and a core network device. A terminal device accesses a data network (data network, DN) by using the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, an NRF network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

The access network device may be a radio access network device (RAN device) or a wired access network device. The radio access network device includes a 3GPP access network device, an untrusted non-3GPP access network device, and a trusted non-3GPP access network device. The 3GPP access network device includes but is not limited to: an evolved base station (evolved NodeB, eNodeB) in LTE, a next generation base station (next generation NodeB, gNB) in a 5G mobile communication system, a base station or a module or unit that completes some functions of a base station in a future mobile communication system, for example, a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wired access network device includes but is not limited to: a wireline access gateway (wireline access gateway), a fixed-line phone network device, a switch, and a router.

The access network device and the terminal device may be located in fixed locations, or may be movable. The access network device and the terminal device may be deployed on land, including an indoor or outdoor scenario and a handheld or vehicle-mounted scenario; or may be deployed on water; or may be deployed on a plane, a balloon, and an artificial satellite in the air. Application scenarios of the access network device and the terminal device are not limited in embodiments of this application.

The AMF network element includes functions such as mobility management or access authentication/authorization. In addition, the AMF network element is responsible for transferring a user policy between the terminal device and the PCF.

The SMF network element includes functions such as session management, execution of a control policy delivered by the PCF network element, UPF network element selection, or allocation of an internet protocol (internet protocol, IP) address of the terminal device.

The UPF network element includes functions such as user plane data forwarding, session/flow-level-based charging statistics collection, or bandwidth limitation.

The UDM network element includes functions such as subscription data management or user access authorization.

The UDR includes functions such as storage and retrieval of subscription data, policy data, application data, or other types of data.

The NEF network element is configured for capability supporting and event exposure.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call business. The AF network element includes an AF network element in a core network (that is, an AF network element of an operator) and a third-party AF network element (for example, an application server of an enterprise).

The PCF network element includes policy control functions such as session-level or service flow-level charging, QoS bandwidth guarantee, mobility management, or terminal device policy decision making. The PCF network element includes an access and mobility management policy control (access and mobility management policy control function, AM PCF) network element and a session management policy control function (session management PCF, SM PCF) network element. The AM PCF network element is configured to formulate an AM policy and a user policy for the terminal device, and the AM PCF network element may also be referred to as a policy control network element that provides a service for the terminal device (PCF for UE). The SM PCF network element is configured to formulate a session management policy (session management policy, SM policy) for a session. The SM PCF network element may also be referred to as a policy control network element that provides a service for a protocol data unit (protocol data unit, PDU) session (PCF for a PDU session).

The NRF network element may be configured to: provide a network element discovery function, and provide, based on a request of another network element, network element information corresponding to a network element type. The NRF network element further provides a network element management service, for example, network element registration, update, and deregistration, or network element status subscription and push.

The BSF network element may provide functions such as BSF service registration/deregistration/update, detection on a connection to the NRF network element, session binding information creation, terminal device information obtaining, and session binding information query for duplicate IP addresses.

The AUSF network element is responsible for authenticating a user, to determine whether the user or a device is allowed to access a network.

The DN is a network located outside an operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be the terminal device, a control server of the sensor is deployed in the DN, and the control server may provide a service the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal device, and the mobile phone or the computer of the employee may access information, data resources, and the like in the internal office network of the company.

Npcf, Nudr, Nudm, Naf, Namf, and Nsmf in FIG. 2 are service-based interfaces respectively provided by the foregoing PCF, UDR, UDM, AF, AMF, and SMF, and are configured to invoke corresponding service-based operations. N1, N2, N3, N4, and N6 are interface sequence numbers. Meanings of these interface sequence numbers are as follows.
(1) N1 is an interface between the AMF network element and the terminal device, and may be configured to transfer non-access stratum (non-access stratum, NAS) signaling (for example, including a QoS rule from the AMF network element) to the terminal device, and the like.
(2) N2 is an interface between the AMF network element and the access network device, and may be configured to transfer radio bearer control information from a core network side to the access network device, and the like.
(3) N3 is an interface between the access network device and the UPF network element, and is mainly configured to transfer uplink and downlink user plane data between the access network device and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

FIG. 3 is a diagram of a 5G network architecture based on point-to-point interfaces. For descriptions of functions of network elements, refer to the descriptions of the functions of the corresponding network elements in FIG. 2. Details are not described again. A main difference between FIG. 3 and FIG. 2 lies in that interfaces between control plane network elements in FIG. 2 are service-based interfaces, and interfaces between control plane network elements in FIG. 3 are point-to-point interfaces.

In the architecture shown in FIG. 3, names and functions of interfaces between network elements are as follows.
(1) For meanings of N1, N2, N3, N4, and N6 interfaces, refer to the foregoing descriptions.
(2) N5 is an interface between an AF network element and a PCF network element, and may be configured to deliver an application service request and report a network event.
(3) N7 is an interface between the PCF network element and an SMF network element, and may be configured to deliver a PDU session granularity control policy and a service data flow granularity control policy.
(4) N8 is an interface between an AMF network element and a UDM network element, and may be used by the AMF network element to obtain subscription data and authentication data related to access and mobility management from the UDM network element, and used by the AMF to register information related to terminal device mobility management with the UDM, and the like.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain subscription data related to session management from the UDM network element, and used by the SMF network element to register information related to a terminal device session with the UDM, and the like.
(7) N11 is an interface between the SMF network element and the AMF network element, and may be configured to: transfer PDU session tunnel information between an access network device and the UPF network element, transfer a control message sent to a terminal device, transfer radio resource control information sent to the access network device, and the like.
(8) N15 is an interface between the PCF network element and the AMF network element, and may be configured to deliver a terminal device policy and an access control-related policy.
(9) N35 is an interface between the UDM network element and a UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in this embodiment of this application.

FIG. 4 is a schematic flowchart of a communication method according to an embodiment of this application. The procedure is also referred to as a network element service registration procedure. The method includes the following steps.

Step 401: A first network element sends a network element registration request to a network repository network element. Correspondingly, the network repository network element receives the network element registration request.

The first network element is an NF network element, for example, an AMF network element, an SMF network element, a UPF network element, or a UDM network element.

The network repository network element may be an NRF network element in a 5G system, or may be a network element that has a function of the foregoing NRF network element in future communication such as a 6G network. This is not limited in this application.

The network element registration request includes network element parameter information of the first network element. The network element parameter information includes identifier information (shared-data-id) of shared data (shared-data) and identifier information of the first network element, but does not include the shared data corresponding to the identifier information of the shared data.

The shared data includes one or more pieces of same attribute information corresponding to a plurality of NF network elements. For example, an NF network element 1 includes attribute information 1, attribute information 2, and attribute information 3. The NF network element 1 includes the attribute information 1, the attribute information 2, and attribute information 4. Because both the NF network element 1 and an NF network element 2 include the attribute information 1 and the attribute information 2, the attribute information 1 and the attribute information 2 may be used as shared data between the NF network element 1 and the NF network element 2, or the attribute information 1 is used as shared data between the NF network element 1 and the NF network element 2, or the attribute information 2 is used as shared data between the NF network element 1 and the NF network element 2. Certainly, an example in which two NF network elements share data is used herein. This application is also applicable to a case in which three or more NF network elements share data.

In an implementation method, the shared data includes one or more items of the following attribute information:
(1) information about an area for which a service can be provided by a network element, for example, information such as a cell, a base station, or a tracking area (tracking area, TA) list for which a service can be provided by the network element;
(2) network element service list: a list of services that can be provided by a current network element for another network element;
(3) network element capability information: information about an extension capability supported by a network element, for example, a vehicle to X (Vehicle to X, V2X) capability or a near field communications (Proximity Service, ProSe) capability, or a list of IP address segments for which a service can be provided, a supported data network name (data network name, DNN), and/or a single network slice selection assistance information (single network slice selection assistance information, S-NSSAI) list, or the like; and
(4) supported user list: a list of users for which a service can be supported by a current network element, for example, a user number segment list and a user group identifier list.

Step 402: The network repository network element stores the network element parameter information.

In an NF network element service registration procedure, when the plurality of NF network elements register with the network repository network element, much of content of network element parameter information sent by the NF network elements may be repeated. For example, in network element parameter information sent by NF network elements in a same NF set (NF SET) to the network repository network element, except NF address information and NF identifiers, other information (such as information about an area for which a service can be supported by a network element, a network element service list, network element capability information, and/or a supported user list) is highly convergent. In this application, when each NF network element performs registration, same content, that is, the shared data, in the network element parameter information is not sent any more. In other words, the shared data is not carried in the network element parameter information, but the identifier information of the shared data is carried.

In the foregoing solution, when the first network element registers a service with the network repository network element, the sent network element parameter information does not carry the shared data, but carries the identifier information of the shared data. This can reduce a size of the network element parameter information, to reduce bandwidth resource overheads and signaling overheads between the first network element and the network repository network element.

In an implementation method, after step 402, the network repository network element determines whether the shared data corresponding to the identifier information of the shared data is stored. If the shared data is not stored, the network repository network element may obtain the shared data and store the shared data. The network repository network element may obtain the shared data by using the following step 403a or step 403b.

Step 403a: The network repository network element obtains the shared data from a central node (central node).

The central node may be a UDR network element or another network repository network element.

In an implementation method, the central node is a unique central node in a public land mobile network (public land mobile network, PLMN). Therefore, the network repository network element obtains, from the unique central node, the shared data corresponding to the identifier information of the shared data. In this case, the identifier information of the shared data may be at a PLMN granularity, in other words, the identifier information of the shared data is unique in the PLMN.

In another implementation method, there are a plurality of central nodes in a PLMN. In this case, the network element registration request in step 401 may carry information about a central node, such as an identifier, an address, or a uniform resource locator (uniform resource locator, URL) of the central node. Then, the network repository network element obtains, from the central node, the shared data corresponding to the identifier information of the shared data. The information about the central node may be in the network element parameter information, or may be carried in the network element registration request in parallel with the network element parameter information. In this case, the identifier information of the shared data may be at a central node granularity, in other words, the identifier information of the shared data is unique in one central node. For example, there are two central nodes in one PLMN, which are a central node 1 and a central node 2. The central node 1 stores shared data 1 and shared data 2, and the central node 2 stores shared data 3 and shared data 4. The shared data 1 and the shared data 2 are respectively indicated by using identifier information 1 and identifier information 2, and the shared data 3 and the shared data 4 are also respectively indicated by using the identifier information 1 and the identifier information 2. It can be learned that two pieces of identifier information 1 and two pieces of identifier information 2 exist in the PLMN, but the two pieces of identifier information 1 indicate different shared data, and the two pieces of identifier information 2 also indicate different shared data. Therefore, a plurality of pieces of same identifier information of shared data may exist in one PLMN, but two pieces of same identifier information of shared data do not exist in a same central node.

In an implementation method, if the network repository network element has not previously subscribed to updated shared data corresponding to the identifier information of the shared data, after step 403a, the network repository network element may send a subscription request to the central node, where the subscription request includes the identifier information of the shared data, and the subscription request is used to subscribe to the updated shared data corresponding to the identifier information of the shared data.

Step 403b: The network repository network element obtains the shared data from the first network element.

In an implementation method, if the network repository network element has not previously subscribed to updated shared data corresponding to the identifier information of the shared data, after step 403b, the network repository network element may send a subscription request to the first network element, where the subscription request includes the identifier information of the shared data, and the subscription request is used to subscribe to the updated shared data corresponding to the identifier information of the shared data.

In the foregoing solution, when the shared data corresponding to the identifier information of the shared data is not stored in the network repository network element, the network repository network element obtains the shared data from the central node or the first network element and stores the shared data. In addition, the network repository network element needs to store only one copy of the shared data, so that occupation of storage resources of the network repository network element can be reduced, and resource utilization efficiency is improved.

In an implementation method, after step 402, if the network repository network element determines that the shared data corresponding to the identifier information of the shared data has been stored, the network repository network element does not need to obtain the shared data, in other words, the network repository network element needs to store only one copy of same shared data, so that occupation of storage resources of the network repository network element can be reduced. The shared data stored by the network repository network element may be obtained by the network repository network element triggered by a network element registration request sent by another NF network element (referred to as an NF1 network element below) different from the first network element. In other words, before step 401, the NF 1 network element sends the network element registration request to the network repository network element, where the network element registration request includes the network element parameter information, and the network element parameter information includes the identifier information of the shared data; and the network repository network element determines that the shared data corresponding to the identifier information of the shared data is not locally stored. In this case, the network repository network element obtains the shared data from a central node or the NF 1 network element and locally stores the shared data. Subsequently, after receiving the network element registration request from the first network element, the network repository network element determines that the shared data has been locally stored. In this case, the network repository network element does not need to obtain the shared data from the central node or the first network element. It should be noted that, in this case, the network repository network element may send a subscription request to the central node or the NF1 network element, where the subscription request includes the identifier information of the shared data, and the subscription request is used to subscribe to updated shared data corresponding to the identifier information of the shared data.

The following describes the foregoing solution with reference to a specific example. It is assumed that an AMF 1, an AMF 2, and an AMF 3 sequentially register with the network repository network element, and the AMF 1, the AMF 2, and the AMF 3 correspond to same shared data. When registering with the network repository network element, the AMF 1 sends identifier information of the shared data. Assuming that the network repository network element does not store the shared data, the network repository network element may obtain, from the AMF 1 or a central node, the shared data corresponding to the identifier information of the shared data. If the network repository network element has not subscribed to updated shared data corresponding to the identifier information of the shared data, the network repository network element may subscribe to the updated shared data corresponding to the identifier information of the shared data from the AMF 1 or the central node. Subsequently, when registering with the network repository network element, the AMF 2 and the AMF 3 send the identifier information of the shared data. If the network repository network element determines that the shared data corresponding to the identifier information of the shared data has been locally stored, the network repository network element does not need to obtain the shared data. In addition, because the updated shared data corresponding to the identifier information of the shared data has been subscribed to from the AMF 1 or the central node, re-subscription is not needed.

It can be learned that in this example, when registering with the network repository network element, the AMF 1, the AMF 2, and the AMF 3 only need to send the identifier information of the shared data, and do not need to send the shared data corresponding to the identifier information of the shared data. In comparison with a case in which the AMF 1, the AMF 2, and the AMF 3 separately send the shared data to the network repository network element when registering with the network repository network element, an amount of sent information can be reduced, and therefore bandwidth resource overheads and signaling overheads can be reduced.

In addition, the network repository network element does not need to separately store same data (that is, the shared data) for the AMF 1, the AMF 2, and the AMF 3, so that occupation of storage resources of the network repository network element can be reduced. For example, the AMF 1, the AMF 2, and the AMF 3 are corresponding to a same network element service list, same information about an area for which a service can be supported by a network element, same network element capability information, and a same supported user number segment list. Not all the AMF 1, the AMF 2, and the AMF 3 need to send the information once and the network repository network element does not need to store three copies of the same information, while the network repository network element needs to store only one copy of the information. The network element service list, the information about an area for which a service can be supported by a network element, the network element capability information, and the supported user number segment list are shared information between the AMF 1, the AMF 2, and the AMF 3.

In an implementation method, in this embodiment of this application, data sharing may be performed between different NF network elements based on different sharing levels. The sharing level indicates a granularity for performing data sharing. The granularity for performing data sharing that is indicated by the sharing level may be a network element set (NF SET) granularity, a network granularity, a central node granularity, or the like. The following separately describes the sharing granularities.

In Method 1, the sharing level indicates to perform data sharing at the network element set granularity.

For example, there is an NF set 1, and the NF set 1 includes an AMF 1, an AMF 2, and an AMF 3. Same attribute information between the AMF 1 and the AMF 2 is referred to as shared data 1, and same attribute information between the AMF 2 and the AMF 3 is referred to as shared data 2. The AMF 1, the AMF 2, and the AMF 3 may all be specific examples of the first network element.

When the AMF 1 sends a network element registration request to the network repository network element, the network element registration request carries identifier information of the shared data 1, identifier information of the NF set 1, and a sharing level. The sharing level indicates to perform data sharing at the network element set granularity. The network repository network element determines whether the shared data 1 corresponding to the identifier information of the NF set 1 and the identifier information of the shared data 1 is locally stored. If the shared data 1 is stored, the shared data 1 does not need to be obtained from another network element. If the shared data 1 is not stored, the shared data 1 may be obtained from a central node or the AMF 1.

When the AMF 2 sends a network element registration request to the network repository network element, the network element registration request carries identifier information of the shared data 1, identifier information of the shared data 2, identifier information of the NF set 1, and a sharing level. The sharing level indicates to perform data sharing at the network element set granularity. The network repository network element determines whether the shared data 1 corresponding to the identifier information of the NF set 1 and the identifier information of the shared data 1 is locally stored. If the shared data 1 is stored, the shared data 1 does not need to be obtained from another network element. If the shared data 1 is not stored, the shared data 1 may be obtained from the central node or the AMF 2. In addition, the network repository network element determines whether the shared data 2 corresponding to the identifier information of the NF set 1 and the identifier information of the shared data 2 is locally stored. If the shared data 2 is stored, the shared data 2 does not need to be obtained from another network element. If the shared data 2 is not stored, the shared data 2 may be obtained from the central node or the AMF 2.

When the AMF 3 sends a network element registration request to the network repository network element, the network element registration request carries identifier information of the shared data 2, identifier information of the NF set 1, and a sharing level. The sharing level indicates to perform data sharing at the network element set granularity. The network repository network element determines whether the shared data 2 corresponding to the identifier information of the NF set 1 and the identifier information of the shared data 2 is locally stored. If the shared data 2 is stored, the shared data 2 does not need to be obtained from another network element. If the shared data 2 is not stored, the shared data 2 may be obtained from the central node or the AMF 3.

In Method 2, the sharing level indicates to perform data sharing at the network granularity.

The network herein may be identified by using a DNN, or may be identified by using a network slice identifier (that is, S-NSSAI), or may be identified by using a data network and a network slice identifier.

For example, the network is identified by using the DNN and the S-NSSAI. It is assumed that when an SMF 1 and an SMF 2 send network element registration requests to the network repository network element, the network element registration requests carry identifier information of shared data 1, a DNN 1, S-NSSAI 1, and a sharing level. The sharing level indicates to perform data sharing at the network granularity. The network repository network element determines whether the shared data 1 corresponding to the identifier information of the shared data 1, the DNN 1, and the S-NSSAI 1 is locally stored. If the shared data 1 is stored, the shared data 1 does not need to be obtained from another network element. If the shared data 1 is not stored, the shared data 1 may be obtained from a central node, or the shared data 1 may be obtained from the SMF 1 or the SMF 2. In this example, the SMF 1 and the SMF 2 are specific examples of the first network element. Both the SMF 1 and the SMF 2 are corresponding to the shared data 1.

It is assumed that when an SMF 3 and an SMF 4 send network element registration requests to the network repository network element, the network element registration requests carry identifier information of shared data 2, a DNN 1, S-NSSAI 2, and a sharing level. The sharing level indicates to perform data sharing at the network granularity. The network repository network element determines whether the shared data 2 corresponding to the identifier information of the shared data 2, the DNN 1, and the S-NSSAI 2 is locally stored. If the shared data 2 is stored, the shared data 2 does not need to be obtained from another network element. If the shared data 2 is not stored, the shared data 2 may be obtained from a central node, or the shared data 2 may be obtained from the SMF 3 or the SMF 4. In this example, the SMF 3 and the SMF 4 are specific examples of the first network element. Both the SMF 3 and the SMF 4 are corresponding to the shared data 2.

In Method 3, the sharing level indicates to perform data sharing at the central node granularity.

It is assumed that when an SMF 1 and an SMF 2 send network element registration requests to the network repository network element, the network element registration requests carry identifier information of shared data 1, identifier information of a central node 1, and a sharing level. The sharing level indicates to perform data sharing at the central node granularity. The network repository network element determines whether the shared data 1 corresponding to the identifier information of the shared data 1 and the identifier information of the central node 1 is locally stored. If the shared data 1 is stored, the shared data 1 does not need to be obtained from another network element. If the shared data 1 is not stored, the shared data 1 may be obtained from the central node 1. The SMF 1 and the SMF 2 herein are specific examples of the first network element. Both the SMF 1 and the SMF 2 are corresponding to the shared data 1.

It is assumed that when an SMF 3 and an SMF 4 send network element registration requests to the network repository network element, the network element registration requests carry identifier information of shared data 2, identifier information of a central node 2, and a sharing level. The sharing level indicates to perform data sharing at the central node granularity. The network repository network element determines whether the shared data 2 corresponding to the identifier information of the shared data 2 and the identifier information of the central node 2 is locally stored. If the shared data 2 is stored, the shared data 2 does not need to be obtained from another network element. If the shared data 2 is not stored, the shared data 2 may be obtained from the central node 2. The SMF 3 and the SMF 4 herein are specific examples of the first network element. Both the SMF 3 and the SMF 4 are corresponding to the shared data 2.

It should be noted that any two or three of Method 1, Method 2, and Method 3 may be implemented in combination. This is not limited in this application. For example, information that needs to be registered by an NF network element includes information 1, information 2, and information 3. The information 1 is shared with another NF network element at a network element set granularity, the information 2 is shared with another NF network element at a network granularity, and the information 3 is shared with another NF network element at a central node granularity.

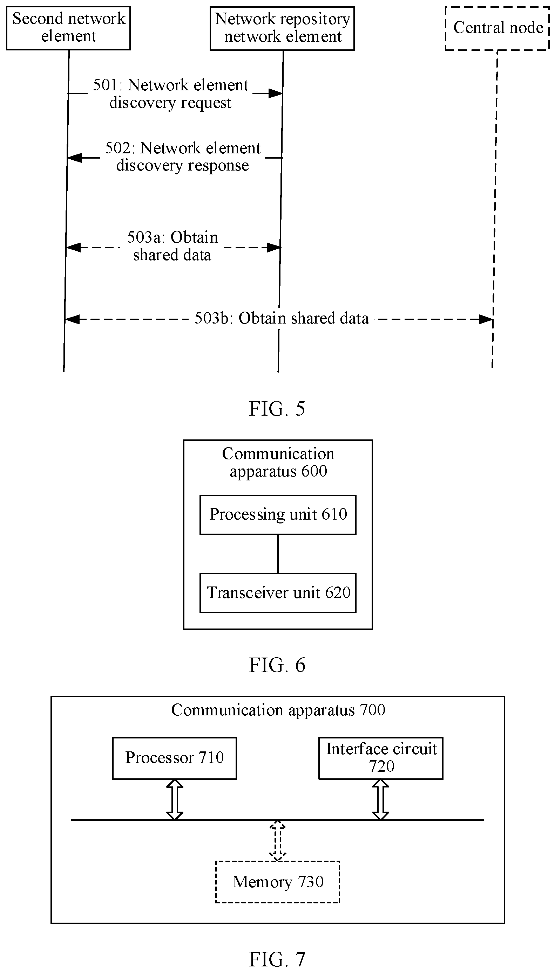

FIG. 5 is a schematic flowchart of a communication method according to an embodiment of this application. The procedure is also referred to as a network element discovery procedure. The method may be implemented with reference to the embodiment in FIG. 4, or may be independently implemented. This is not limited in this application.

The method includes the following steps.

Step 501: A second network element sends a network element discovery request to a network repository network element. Correspondingly, the network repository network element receives the network element discovery request.

The network element discovery request includes a network element type (NF type) and a search criterion. For example, the search criterion includes a subscription permanent identifier (subscription permanent identifier, SUPI) or capability information of a specific terminal device, and indicates to request to query, from the network repository network element, an NF network element that provides a service for the specific terminal device or an NF network element that satisfies specified capability information.

Step 502: The network repository network element sends a network element discovery response to the second network element. Correspondingly, the second network element receives the network element discovery response.

For example, when the network repository network element selects a first network element based on the network element type and the search criterion in the network element discovery request, the network element discovery response includes identifier information of the first network element and identifier information of shared data, and the identifier information of the shared data is used by the second network element to obtain the shared data. The first network element may be the first network element in the embodiment in FIG. 4.

A type of the first network element is the same as the network element type in the network element discovery request, and the first network element satisfies the search criterion in the network element discovery request.

In the foregoing solution, when returning the queried information about the first network element to the second network element, the network repository network element does not need to send the shared data corresponding to the first network element to the second network element, but sends the identifier information of the shared data corresponding to the first network element to the second network element, so that bandwidth resource overheads and signaling overheads can be reduced.

After step 502, the second network element determines whether the shared data corresponding to the identifier information of the shared data has been locally stored. If the shared data corresponding to the identifier information of the shared data has been stored, the second network element does not need to obtain the shared data from another network element, and when the shared data needs to be used subsequently, the second network element merely obtains the shared data locally. If the shared data corresponding to the identifier information of the shared data is not stored, the shared data may be obtained from another network element and stored. For example, the shared data may be obtained by using the following step 503a or step 503b.

Step 503a: The second network element obtains the shared data from the network repository network element.

In an implementation method, if the second network element has not previously subscribed to updated shared data corresponding to the identifier information of the shared data, after step 503a, the second network element may send a subscription request to the network repository network element, where the subscription request includes the identifier information of the shared data, and the subscription request is used to subscribe to the updated shared data corresponding to the identifier information of the shared data.

Step 503b: The second network element obtains the shared data from a central node.

For example, the network element discovery response in step 502 further includes information about the central node, and the second network element obtains the shared data from the central node based on the information about the central node. For the implementation method, the network repository network element may not need to store the shared data, and the central node stores the shared data.

In an implementation method, if the second network element has not previously subscribed to updated shared data corresponding to the identifier information of the shared data, after step 503b, the second network element may send a subscription request to the central node, where the subscription request includes the identifier information of the shared data, and the subscription request is used to subscribe to the updated shared data corresponding to the identifier information of the shared data.

In the foregoing solution, when the shared data corresponding to the identifier information of the shared data is not stored in the second network element, the second network element obtains the shared data from the central node or the network repository network element and stores the shared data. In addition, the second network element needs to store only one copy of the shared data, so that occupation of storage resources of the second network element can be reduced, and resource utilization efficiency is improved.

It may be understood that, to implement functions in the foregoing embodiments, the network repository network element includes corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 6 and FIG. 7 each are a diagram of a structure of a possible communication apparatus according to an embodiment of this application. The communication apparatus may be configured to implement functions of the network repository network element in the foregoing method embodiments. Therefore, beneficial effects of the foregoing method embodiments can also be implemented. In embodiments of this application, the communication apparatus may be a network repository network element, or may be a module (for example, a chip) used in the network repository network element.

As shown in FIG. 6, the communication apparatus 600 includes a processing unit 610 and a transceiver unit 620. The communication apparatus 600 is configured to implement functions of the network repository network element in the method embodiment shown in FIG. 4 or FIG. 5.

When the communication apparatus 600 is configured to implement a function of the network repository network element in the method embodiment shown in FIG. 4 or FIG. 5, the transceiver unit 620 is configured to receive a network element registration request from a first network element, where the network element registration request includes network element parameter information of the first network element, the network element parameter information includes identifier information of shared data and identifier information of the first network element, and the network element parameter information does not include the shared data corresponding to the identifier information of the shared data. The processing unit 610 is configured to store the network element parameter information.

In a possible implementation method, the communication apparatus 600 has stored the shared data.

In a possible implementation method, the transceiver unit 620 is further configured to send a subscription request to a central node, where the subscription request includes the identifier information of the shared data, and the subscription request is used to subscribe to updated shared data corresponding to the identifier information of the shared data.

In a possible implementation method, the processing unit 610 is further configured to: obtain the shared data, and store the shared data.

In a possible implementation method, the processing unit 610 is specifically configured to obtain the shared data from the first network element.

In a possible implementation method, the transceiver unit 620 is further configured to send a subscription request to the first network element, where the subscription request includes the identifier information of the shared data, and the subscription request is used to subscribe to updated shared data corresponding to the identifier information of the shared data.

In a possible implementation method, the registration request further includes information about a central node. The processing unit 610 is specifically configured to obtain the shared data from the central node.

In a possible implementation method, the transceiver unit 620 is further configured to send a subscription request to the central node, where the subscription request includes the identifier information of the shared data, and the subscription request is used to subscribe to updated shared data corresponding to the identifier information of the shared data.

In a possible implementation method, the registration request further includes a sharing level, and the sharing level indicates a granularity for performing data sharing.

In a possible implementation method, the registration request further includes identifier information of a first network element set to which the first network element belongs, and the sharing level specifically indicates to perform data sharing at a network element set granularity. The shared data stored in the communication apparatus 600 is corresponding to the identifier information of the first network element set and the identifier information of the shared data.

In a possible implementation method, the registration request further includes identifier information of a network corresponding to the first network element, the sharing level specifically indicates to perform data sharing at a network granularity, and the identifier information of the network includes a data network name and/or a network slice identifier. The shared data stored in the communication apparatus 600 is corresponding to the identifier information of the network and the identifier information of the shared data.

In a possible implementation method, the registration request further includes information about a central node, and the sharing level specifically indicates to perform data sharing at a central node granularity. The shared data stored in the communication apparatus 600 is corresponding to the information about the central node and the identifier information of the shared data.

In a possible implementation method, the transceiver unit 620 is further configured to: receive a network element discovery request from a second network element, where the network element discovery request includes a network element type and a search criterion; and send a network element discovery response to the second network element, where the network element discovery response includes the identifier information of the first network element and the identifier information of the shared data, and the identifier information of the shared data is used by the second network element to obtain the shared data. A type of the first network element is the same as the network element type, and the first network element satisfies the search criterion.

In a possible implementation method, the network element discovery response further includes information about a central node, and the information about the central node is used by the second network element to obtain the shared data from the central node.

For more detailed descriptions of the processing unit 610 and the transceiver unit 620, directly refer to related descriptions in the method embodiment shown in FIG. 4 or FIG. 5. Details are not described herein again.

The communication apparatus 700 shown in FIG. 7 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or store input data required by the processor 710 to run instructions, or store data generated after the processor 710 runs instructions.

When the communication apparatus 700 is configured to implement the method shown in FIG. 4 or FIG. 5, the processor 710 is configured to implement the function of the processing unit 610, and the interface circuit 720 is configured to implement the function of the transceiver unit 620.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write the information into the storage medium. Certainly, the storage medium may alternatively be a component of the processor. The processor and the storage medium may be located in the ASIC. In addition, the ASIC may be located in a base station or a terminal device. Certainly, the processor and the storage medium may alternatively exist in a base station or a terminal device as discrete components.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a base station, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following three cases: Only A exists, both A and B exist, and only B exists, where A and B may be singular or plural. **In** the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A communication method, comprising:
receiving, by a network repository network element, a network element registration request from a first network element, wherein the network element registration request comprises network element parameter information of the first network element, the network element parameter information comprises identifier information of shared data and identifier information of the first network element, and the network element parameter information does not comprise the shared data corresponding to the identifier information of the shared data; and
storing, by the network repository network element, the network element parameter information.

2. The method according to claim 1, wherein
the network repository network element has stored the shared data.

3. The method according to claim 2, wherein the method further comprises:
sending, by the network repository network element, a subscription request to a central node, wherein the subscription request comprises the identifier information of the shared data, and the subscription request is used to subscribe to updated shared data corresponding to the identifier information of the shared data.

4. The method according to claim 1, wherein the method further comprises:
obtaining, by the network repository network element, the shared data, and storing the shared data.

5. The method according to claim 4, wherein the obtaining, by the network repository network element, the shared data comprises:
obtaining, by the network repository network element, the shared data from the first network element.

6. The method according to claim 5, wherein the method further comprises:
sending, by the network repository network element, a subscription request to the first network element, wherein the subscription request comprises the identifier information of the shared data, and the subscription request is used to subscribe to updated shared data corresponding to the identifier information of the shared data.

7. The method according to claim 4, wherein the registration request further comprises information about a central node; and
the obtaining, by the network repository network element, the shared data comprises:
obtaining, by the network repository network element, the shared data from the central node.

8. The method according to claim 7, wherein the method further comprises:
sending, by the network repository network element, a subscription request to the central node, wherein the subscription request comprises the identifier information of the shared data, and the subscription request is used to subscribe to updated shared data corresponding to the identifier information of the shared data.

9. The method according to any one of claims 2 to 8, wherein the registration request further comprises a sharing level, and the sharing level indicates a granularity for performing data sharing.

10. The method according to claim 9, wherein the registration request further comprises identifier information of a first network element set to which the first network element belongs, and the sharing level specifically indicates to perform data sharing at a network element set granularity; and
the shared data stored by the network repository network element is corresponding to the identifier information of the first network element set and the identifier information of the shared data.

11. The method according to claim 9, wherein the registration request further comprises identifier information of a network corresponding to the first network element, the sharing level specifically indicates to perform data sharing at a network granularity, and the identifier information of the network comprises a data network name and/or a network slice identifier; and
the shared data stored by the network repository network element is corresponding to the identifier information of the network and the identifier information of the shared data.

12. The method according to claim 9, wherein the registration request further comprises information about a central node, and the sharing level specifically indicates to perform data sharing at a central node granularity; and
the shared data stored by the network repository network element is corresponding to the information about the central node and the identifier information of the shared data.

13. The method according to any one of claims 1 to 12, wherein the method further comprises:
receiving, by the network repository network element, a network element discovery request from a second network element, wherein the network element discovery request comprises a network element type and a search criterion; and
sending, by the network repository network element, a network element discovery response to the second network element, wherein the network element discovery response comprises the identifier information of the first network element and the identifier information of the shared data, and the identifier information of the shared data is used by the second network element to obtain the shared data, wherein
a type of the first network element is the same as the network element type, and the first network element satisfies the search criterion.

14. The method according to claim 13, wherein the network element discovery response further comprises information about a central node, and the information about the central node is used by the second network element to obtain the shared data from the central node.

15. A communication apparatus, comprising a module configured to perform the method according to any one of claims 1 to 14.

16. A computer program product, wherein the computer program product comprises a computer program or instructions, and when the computer program or the instructions are run on a processor, the processor is enabled to perform the method according to any one of claims 1 to 14.

17. A computer-readable storage medium, wherein the storage medium stores a computer program or instructions, and when the computer program or the instructions are executed by a communication apparatus, the method according to any one of claims 1 to 14 is implemented.

18. A communication system, comprising a network repository network element configured to perform the method according to any one of claims 1 to 14, and a first network element configured to send a network element registration request to the network repository network element.
